(19) Europäisches Patentamt / European Patent Office / Office européen des brevets

(11) **EP 3 449 557 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **17713260.2**

(22) Anmeldetag: **23.03.2017**

(51) Internationale Patentklassifikation (IPC):
**H02M 7/5387** (2007.01)    *H02M 1/32* (2007.01)

(52) Gemeinsame Patentklassifikation (CPC):
**H02M 7/53875; H02M 1/322**

(86) Internationale Anmeldenummer:
**PCT/EP2017/056960**

(87) Internationale Veröffentlichungsnummer:
**WO 2017/186419 (02.11.2017 Gazette 2017/44)**

(54) **WECHSELRICHTERANORDNUNG, ELEKTRISCHES ANTRIEBSSYSTEM UND VERFAHREN ZUM ENTLADEN EINES ZWISCHENKREISKONDENSATORS IN EINER WECHSELRICHTERANORDNUNG**

INVERTER ARRANGEMENT, ELECTRIC DRIVE SYSTEM, AND METHOD FOR DISCHARGING A DC LINK CAPACITOR IN AN INVERTER ARRANGEMENT

DISPOSITIF ONDULEUR, SYSTÈME D'ENTRAÎNEMENT ÉLECTRIQUE ET PROCÉDÉ DE DÉCHARGE D'UN CONDENSATEUR DE CIRCUIT INTERMÉDIAIRE DANS UN DISPOSITIF ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2016 DE 102016207373**

(43) Veröffentlichungstag der Anmeldung:
**06.03.2019 Patentblatt 2019/10**

(73) Patentinhaber: **Robert Bosch GmbH**
**70442 Stuttgart (DE)**

(72) Erfinder:
• **EBERLEIN, Edwin**
  **70197 Stuttgart (DE)**
• **TRUNK, Martin**
  **74196 Neuenstadt (DE)**
• **BARTSCH, Timo**
  **71296 Heimsheim (DE)**

(56) Entgegenhaltungen:
JP-A- 2007 195 343      US-A1- 2011 080 149
US-A1- 2011 221 374     US-A1- 2012 049 773
US-A1- 2014 095 005

**Beschreibung**

Die vorliegende Erfindung betrifft eine Wechselrichteranordnung und ein elektrisches Antriebssystem mit einer solchen Wechselrichteranordnung, sowie ein Verfahren zum Entladen eines Zwischenkreiskondensators in einer Wechselrichteranordnung. Insbesondere betrifft die vorliegende Erfindung das Entladen eines Zwischenkreiskondensators in einer Wechselrichteranordnung in einem Freilaufmodus.

Stand der Technik

Elektrische Antriebssysteme, wie sie zum Beispiel in Elektro- und Hybridfahrzeugen eingesetzt werden, können Wechselrichter umfassen, die aus einer elektrischen Gleichspannung Spannungssignale generiert, die zum Ansteuern einer elektrischen Maschine geeignet sind. Dabei ist am Eingang eines solchen Wechselrichters ein Gleichspannungszwischenkreis mit einem Zwischenkreiskondensator vorgesehen.

Die Wechselrichter können beispielsweise als Vollbrückenschaltung mit einer vorgegebenen Anzahl von Brückenzweigen mit je zwei Halbleiterschaltern ausgeführt sein. Ein erster Halbleiterschalter kann dabei als sogenannter High-Side-Schalter mit einem ersten Anschluss des Gleichspannungszwischenkreises verbunden sein. Ein zweiter Halbleiterschalter kann als sogenannter Low-Side-Schalter mit einem zweiten Anschluss des Gleichspannungszwischenkreis verbunden sein. Weiterhin sind der erste und der zweite Halbleiterschalter an einem Knotenpunkt elektrisch miteinander verbunden. Jeder dieser Knotenpunkte kann mit einem Phasenanschluss einer elektrischen Maschine verbunden werden. Als Halbleiterschalter können beispielsweise Bipolartransistoren mit einer isolierten Gateelektrode (IGBT-Module) mit antiparallel geschalteten Dioden oder MOSFETs (Metalloxid-Feldeffekttransistoren) verwendet werden.

Im Fehlerfall werden aus Sicherheitsgründen verschiedene Anforderungen an die Steuerung gestellt. Beispielsweise kann es erforderlich sein, eine angeschlossene elektrische Maschine im Fehlerfall in einen sicheren Betriebsmodus zu bringen. Ein solcher sicherer Betriebsmodus kann beispielsweise einen aktiven Kurzschluss umfassen, bei dem alle High-Side-Schalter oder alle Low-Side-Schalter geschlossen sind. Alternativ kann als sicherer Betriebsmodus auch ein Freilaufmodus vorgesehen sein, bei dem alle Schalter der Vollbrücke geöffnet sind.

Darüber hinaus kann es im Fehlerfall auch wünschenswert sein, den Gleichspannungszwischenkreis schnell und zuverlässig zu entladen. Dies kann beispielsweise durch eine Notentladung realisiert werden.

Die Druckschrift WO 2013/050196 A1 offenbart eine Vorrichtung und ein Verfahren zum Entladen eines Kondensators in einem Wechselrichter. Das Entladen des Kondensators in dem Wechselrichter wird dabei während eines aktiven Kurzschlusses mittels Ansteuern der Halbleiterschaltelemente des Wechselrichters vorgenommen. Die Druckschrift US 2011/0221374 A1 offenbart eine Entladesteuereinrichtung für ein Antriebssystem in einem Fahrzeug. Die Druckschrift US 2012/0049773 A1 offenbart ebenfalls eine Entladesteuereinrichtung für ein Antriebssystem in einem Fahrzeug. Die Druckschrift US 2014/0095005 A1 offenbart eine Vorrichtung und zwei Verfahren zur Entladung eines Zwischenkreiskondensators in einem Fahrzeug. Die Druckschrift US 2011/0080149 A1 offenbart eine Vorrichtung und ein Verfahren zur Entladung eines Zwischenkreiskondensators einer Wechselrichteranordnung. Die Druckschrift JP 2007 195343 A offenbart eine Temperaturüberwachung für einen Wechselrichter.

Offenbarung der Erfindung

Die vorliegende Erfindung offenbart einen Wechselrichter mit den Merkmalen des Patentanspruchs 1, ein elektrisches Antriebssystem mit den Merkmalen des Patentanspruchs 2 und ein Verfahren zum Entladen eines Zwischenkreiskondensators in einer Wechselrichteranordnung mit den Merkmalen des Patentanspruchs 6.

Vorteile der Erfindung

Der vorliegenden Erfindung liegt die Erkenntnis zugrunde, dass eine Entladung eines Zwischenkreiskondensators in einem Wechselrichter in allen sicheren Betriebszuständen einer elektrischen Maschine wünschenswert ist. Insbesondere liegt der vorliegenden Erfindung die Erkenntnis zugrunde, dass ein Zwischenkreiskondensator in einem Wechselrichter auch bei einem Freilauf als sicherer Zustand erforderlich ist.

Es ist daher eine Idee der vorliegenden Erfindung, dieser Erkenntnis Rechnung zu tragen und auch in einem Freilaufmodus eine möglichst effiziente Entladung eines Zwischenkreiskondensators zu ermöglichen. Hierdurch können auch im Freilauf als sicherer Betriebszustand erforderliche Sicherheitskriterien eingehalten werden. Dabei kann gegebenenfalls der Freilauf als sicherer Betriebszustand beibehalten werden und ein Wechsel in einen aktiven Kurzschluss muss nicht durchgeführt werden. Durch das Entladen des Zwischenkreiskondensators im Freilaufmodus ist somit nicht zwangsläufig ein aktiver Kurzschluss erforderlich. Somit kann beispielsweise auch die Erwärmung des Wechselrichters sowie der angeschlossenen elektrischen Maschine aufgrund eines aktiven Kurzschlusses vermindert werden.

Darüber hinaus ist beispielsweise beim Einsatz von Asynchronmaschinen gegebenenfalls ein aktiver Kurzschluss nicht zulässig, da sich hierbei sehr große Statorströme einstellen können und sich außerdem ein großes Bremsmoment ausbildet.

Somit ermöglicht die vorliegende Erfindung ein effizientes Entladen eines Zwischenkreiskondensators auch im ganzen Drehzahlbereich einer mindestens teilweise entstromten bzw. entmagnetisierten Asynchronmaschine.

Erfindungsgemäß umfasst das Antakten des zweiten Halbleiterschalters in dem primären Brückenzweig ein kurzzeitiges Ansteuern des zweiten Halbleiterschalters. Hierbei wird der zweite Halbleiterschalter jedoch nicht vollständig leitend geschaltet. Die Ansteuersignale für das Ansteuern des zweiten Halbleiterschalters sind dabei so kurz gewählt, dass der Halbleiterschalter sich nur kurzzeitig in einem Übergangszustand zwischen Sperrzustand und Leitzustand befindet. Während dieser Zeit kann Energie aus dem Zwischenkreiskondensator durch den Halbleiterschalter fließen und dabei in Wärme umgewandelt werden. Dies ermöglicht ein schnelles und effizientes Abbauen der Spannung in dem Zwischenkreiskondensator.

Gemäß einer Ausführungsform ist die Steuervorrichtung der Wechselrichteranordnung dazu ausgelegt, einen Halbleiterschalter der Vollbrücke, der nicht in dem primären Brückenzweig liegt, dann zu öffnen, wenn ein elektrischer Strom durch den entsprechenden Halbleiterschalter einen vorbestimmten Grenzwert überschreitet. Liegt der elektrische Strom in dem Halbleiterschalter dagegen unterhalb des vorgegebenen Grenzwertes, so bleibt das sich dabei einstellende Drehmoment der elektrischen Maschine vernachlässigbar und ein Öffnen des entsprechenden Halbleiterschalters ist nicht erforderlich.

Gemäß einer Ausführungsform umfasst jeder Brückenzweig der Vollbrücke einen Spannungssensor. Dieser Spannungssensor ist dazu ausgelegt, eine elektrische Spannung zwischen dem entsprechenden Knotenpunkt des jeweiligen Brückenzweigs und einem Bezugspotential zu erfassen. Durch Auswertung der detektierten elektrischen Spannungen zwischen Knotenpunkt und Bezugspotential kann jeweils auf einfache Weise die Zuordnung eines Brückenzweigs zu einem primären Brückenzweig erfolgen.

Gemäß einer Ausführungsform wird der primäre Brückenzweig basierend auf einer Rotorlage einer elektrischen Maschine ermittelt, welche mit der Wechselrichteranordnung elektrisch koppelbar ist. Durch Auswertung der Rotorlage einer elektrischen Maschine kann ohne zusätzliche Sensorik, wie zum Beispiel einer Spannungsmessung, eine einfache Zuordnung eines Brückenzweigs zu dem primären Brückenzweig erfolgen.

Gemäß einer Ausführungsform des elektrischen Antriebssystems umfasst die elektrische Maschine eine permanenterregte Synchronmaschine. Auch bei permanenterregten Synchronmaschinen unterhalb einer vorgegebenen Polradspannung ist somit ein Entladen des Zwischenkreiskondensators mittels der Wechselrichteranordnung in einem Freilauf möglich.

Gemäß einer Ausführungsform ist die Steuervorrichtung der Wechselrichteranordnung dazu ausgelegt, in der Vollbrücke einen aktiven Kurzschluss einzustellen, wenn die Polradspannung in der elektrischen Maschine, insbesondere einer permanenterregten Synchronmaschine, einen vorbestimmten Grenzwert überschreitet. Beispielsweise kann der Grenzwert auf einen Wert des Quotienten von $\dfrac{Zwischenkreisspannung}{2 \cdot \cos 30°}$ eingestellt werden.

Gemäß einer weiteren Ausführungsform kann die elektrische Maschine eine Asynchronmaschine umfassen. Insbesondere bei Asynchronmaschinen ist ein aktiver Kurzschluss als sicherer Betriebszustand nicht zulässig, da sich dabei sehr große Statorströme einstellen und sich ein sehr großes Bremsmoment ausbildet. Es ist jedoch möglich, dass auch bei Asynchronmaschinen nach entsprechender Reduzierung des Flusses bzw. des feldbildenden Statorstroms ein Wechsel in einen aktiven Kurzschluss erfolgen kann.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

Kurze Beschreibung der Zeichnungen

Die vorliegende Erfindung wird nachfolgend anhand der in den schematischen Figuren der Zeichnung angegebenen Beispiele näher erläutert. Dabei zeigen:

Figur 1:  eine schematische Darstellung eines elektrischen Antriebssystems mit einer Wechselrichteranordnung gemäß einer Ausführungsform;

Figur 2:  eine schematische Darstellung von Spannungsverläufen der Phasenspannungen eines elektrischen Antriebssystems;

Figur 3:  eine schematische Darstellung eines Spannungsverlaufs in einem elektrischen Antriebssystem gemäß einer Ausführungsform;

Figur 4:  eine schematische Darstellung eines Spannungsverlaufs für die Phasenspannung eines elektrischen Antriebssystems gemäß einer Ausführungsform; und

Figur 5:  eine schematische Darstellung eines Ablaufdiagramms, wie es einem Verfahren zum Entladen eines Zwischenkreiskondensators gemäß einer Ausführungsform zugrunde liegt.

Ausführungsformen der Erfindung

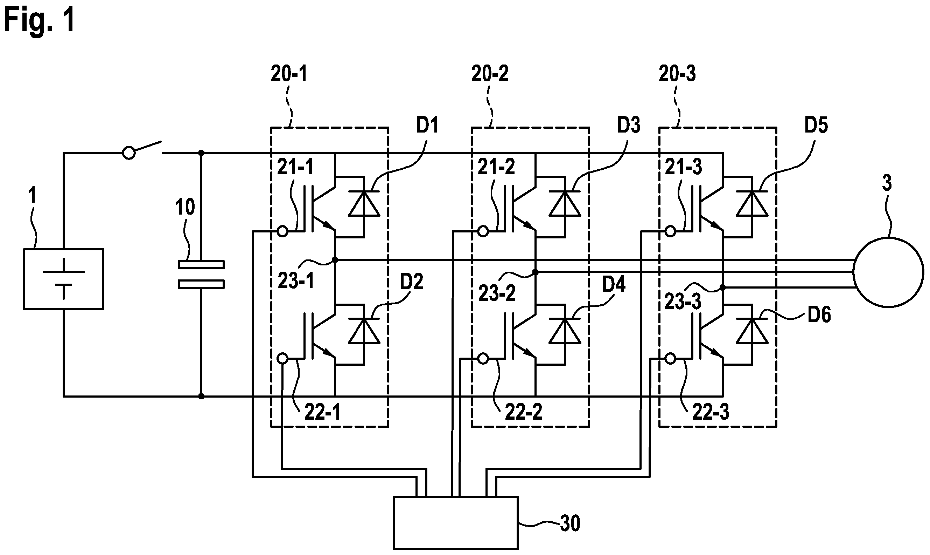

In allen Figuren sind gleiche bzw. funktionsgleiche Elemente und Vorrichtungen - sofern nicht anders

angegeben - mit gleichen Bezugzeichen versehen. Figur 1 zeigt eine schematische Darstellung eines elektrischen Antriebssystems mit einer Wechselrichteranordnung gemäß einer Ausführungsform. Die Wechselrichteranordnung umfasst eine Vollbrückenschaltung mit einer Mehrzahl von Brückenzweigen 20-i. Die hier dargestellte Anzahl von drei Brückenzweigen stellt dabei nur eine beispielhafte Ausführungsform dar. Dabei ist die Wechselrichteranordnung jedoch nicht auf eine Vollbrückenschaltung mit genau drei Brückenzweigen beschränkt. Vielmehr sind auch Vollbrückenschaltungen mit zwei, vier, fünf, sechs oder einer beliebigen anderen

Anzahl von Brückenzweiten denkbar. Jeder Brückenzweig 20-i umfasst einen ersten Halbleiterschalter 21-i und einen zweiten Halbleiterschalter 22-i. Der erste Halbleiterschalter 21-i und der zweite Halbleiterschalter 22-i sind dabei jeweils an einem Knotenpunkt 23-i miteinander verbunden. In dem hier dargestellten Ausführungsbeispiel handelt es sich bei dem ersten Halbleiterschalter 21-i um den oberen Halbleiterschalter (High-Side-Schalter), und bei dem zweiten Halbleiterschalter 22-i handelt es sich um den unteren Halbleiterschalter (Low-Side-Schalter). Alternativ ist es jedoch auch ebenso möglich, dass der obere Halbleiterschalter als zweiter Halbleiterschalter bezeichnet wird und der untere Halbleiterschalter als erster Halbleiterschalter bezeichnet wird. Parallel zu jedem Halbleiterschalter 21-i und 22-i kann dabei jeweils eine Diode Di vorgesehen sein. Bei den Halbleiterschaltern kann es sich beispielsweise um bipolare Transistoren mit einem isolierten Gateanschluss (IGBT) handeln. Aber auch Metalloxid-Feldeffekttransistoren (MOSFET) oder andere Halbleiterschalter sind darüber hinaus ebenso möglich.

Alle Brückenzweige 20-i sind dabei an einem Anschluss mit einem Anschluss des Zwischenkreiskondensators 10 elektrisch verbunden. Die anderen Anschlüsse der Brückenzweige 20-i sind mit einem weiteren Anschluss des Zwischenkreiskondensators 10 elektrisch verbunden. Die Knotenpunkte 23-i der Brückenzweige 20-i können mit den Phasenanschlüssen einer elektrischen Maschine 3 elektrisch verbunden werden. Der Zwischenkreiskondensator 10 und somit die Wechselrichteranordnung kann von einer elektrischen Gleichspannungsquelle 1, wie zum Beispiel einer Traktionsbatterie eines Elektro- oder Hybridfahrzeuges oder ähnlichem gespeist werden. Zwischen Gleichspannungsquelle 1 und Zwischenkreiskondensator 10 kann ein Trennschalter zur Unterbrechung der elektrischen Verbindung zwischen Gleichspannungsquelle 1 und Zwischenkreiskondensator 10 vorgesehen sein. Die Halbleiterschalter 21-i und 22-i der Vollbrücke werden dabei von einer Steuervorrichtung 30 angesteuert.

Die Steuervorrichtung 30 kann dabei in einem normalen Betriebsmodus die Halbleiterschalter 21-i und 22-i ansteuern, um an der elektrischen Maschine 3 ein gewünschtes Drehmoment einzustellen. Darüber hinaus kann, beispielsweise in einer Gefahrensituation oder ähnlichem, die elektrische Maschine 3 in einen sicheren Betriebszustand gebracht werden. Dabei kann auch der Zwischenkreiskondensator 10 entladen werden.

Als sicherer Betriebszustand kann beispielsweise ein aktiver Kurzschluss gewählt werden. Beim aktiven Kurzschluss werden alle oberen Halbleiterschalter, beispielsweise die ersten Halbleiterschalter 21-i, oder alternativ alle unteren Halbleiterschalter, beispielsweise alle zweiten Halbleiterschalter 22-i geschlossen. Alternativ kann als sicherer Betriebszustand jedoch auch ein Freilauf gewählt werden, bei dem keine elektrische Verbindung zwischen den einzelnen Phasenanschlüssen der elektrischen Maschine 3 vorhanden ist. Beispielsweise können hierzu alle Halbleiterschalter 21-i und 22-i der Vollbrücke geöffnet sein. Um darüber hinaus den Zwischenkreiskondensator 10 zu entladen, kann in einem Brückenzweig 20-i der Vollbrücke ein Halbleiterschalter geschlossen werden, während durch den anderen Halbleiterschalter desselben Brückenzweigs 20-i ein Antakten stattfindet. Unter einem Antakten versteht man dabei, dass ein Halbleiterschalter durch ein Ansteuersignal der Steuervorrichtung 30 kurzzeitig angesteuert wird, wobei die Pulslänge des Ansteuersignals so kurz gewählt wird, dass der entsprechende Halbleiterschalter 21-i bzw. 22-i nicht vollständig leitend geschaltet wird. Vielmehr geht der Halbleiterschalter 21-i bzw. 22-i nur kurzzeitig in einen Übergangszustand zwischen Sperrzustand und leitendem Zustand über. In dieser Zeit kann Energie aus dem Zwischenkreiskondensator 10 in dem jeweiligen Halbleiterschalter 21-i bzw. 22-i in Wärme umgewandelt werden, wodurch die Energie des Zwischenkreiskondensators 10 rasch und effektiv abgebaut wird.

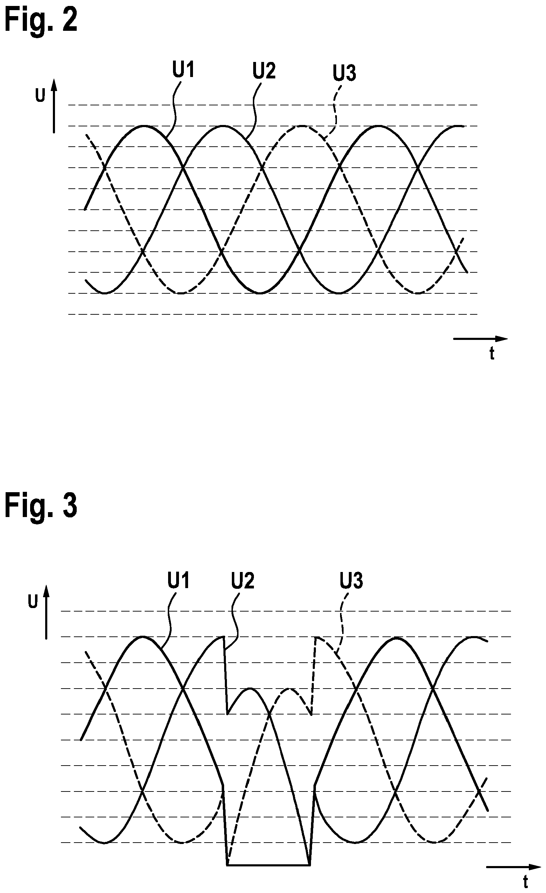

Sind in dem Wechselrichter alle Halbleiterschalter 21-i und 22-i der Vollbrücke geöffnet, so bildet sich in den Phasensträngen der elektrischen Maschine 3 ein Spannungssystem U1, U2, U3 aus, das sich zwischen dem positiven und negativen Potential der angeschlossenen Gleichspannungsquelle 1 frei bewegen kann, wie dies beispielsweise in Figur 2 schematisch dargestellt ist.

Figur 3 zeigt eine schematische Darstellung eines Spannungsverlaufs eines Dreiphasensystems, wobei während des Zeitraums I ein Antakten durch den ersten Brückenzweig 20-1 erfolgt. Dabei wird zu Beginn des Zeitintervalls I durch die Steuervorrichtung 30 festgestellt, dass die Phasenspannung U1 am Knotenpunkt 23-1 kleiner ist als die Phasenspannungen U2 und U3 an den Knotenpunkten 23-2 und 23-3. Daher wird durch die Steuervorrichtung 30 der erste Brückenzweig 20-1 für das Antakten ausgewählt. Die Steuervorrichtung 30 schließt hierzu den unteren Halbleiterschalter 22-1. Hierdurch floated das Dreiphasensystem nun nicht mehr zwischen den Potentialen der Zwischenkreisspannung, sondern wird durch den leitenden Schalter 22-1 fest auf das negative Potential des Zwischenkreises bezogen. Die Spannung zwischen den einzelnen Leitern der elektrischen Maschine 3 ist dabei weiterhin genauso groß wie im Freilauf. Es wird in die elektrische Maschine 3 kein Strom eingeprägt. Anschließend erfolgt durch den oberen Halbleiterschalter 21-1 des ersten Brückenzweigs 20-1 ein Antakten. Hierdurch kann elektrische Energie aus dem Zwischenkreiskondensator 10 in dem Halbleiterschlater 21-1 in Wärme umgesetzt werden.

Am Ende des Zeitintervalls I sinkt die Phasenspannung U2 am Knotenpunkt 23-2 des zweiten Brückenzweigs 20-2 unterhalb die Phasenspannungen U1, U3 am ersten Knotenpunkt 23-1 des ersten Brückenzweigs 20-1. Daher wird das Antakten in dem ersten Brückenzweig 20-1 beendet und der geschlossene Halbleiterschalter 22-1 in dem ersten Brückenzweig 20-1 wird geöffnet.

Anschließend kann die Entladung des Zwischenkreiskondensators 10 durch ein Antakten in dem zweiten Brückenzweig 20-2 fortgesetzt werden, da nun die Spannung am zweiten Knotenpunkt 23-2 des zweiten Brückenzweigs 20-2 niedriger ist als die Phasenspannungen an den Knotenpunkten 23-1 und 23-3 des ersten bzw. dritten Brückenzweigs 20-1 bzw. 20-3.

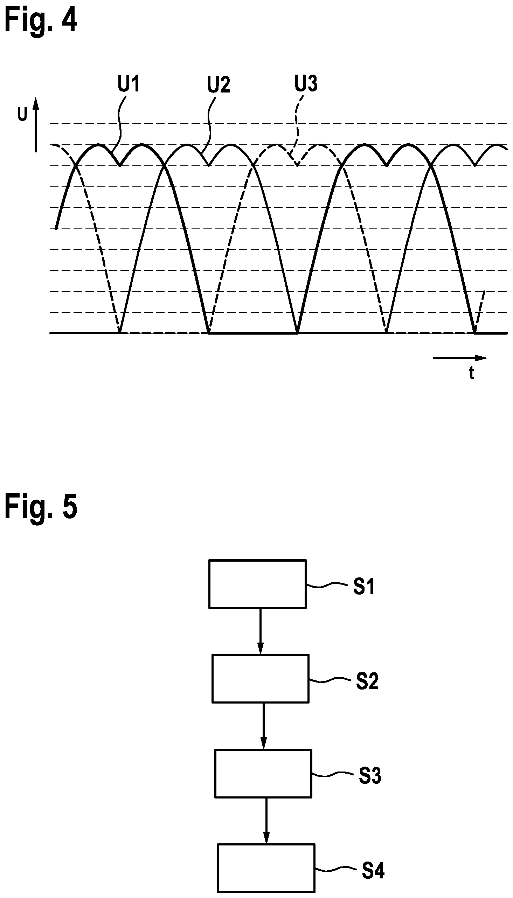

Kombiniert man die zuvor beschriebene Vorgehensweise für alle drei Phasen, so erhält man einen Signalverlauf der Phasenspannungen, wie er in Figur 4 dargestellt ist. Wie dabei zu erkennen ist, erfolgt bei einem dreiphasigen System jeweils nach 120° ein Wechsel des Brückenzweigs 20-i , in dem das Antakten durch einen Halbleiterschalter des entsprechenden Brückenzweigs 20-i erfolgt.

Die Auswahl des entsprechenden Brückenzweigs 20-i für das Antakten kann dabei beispielsweise durch Messen der Phasenspannungen U1, U2, U3 an den Knotenpunkten 23-i erfolgen. Beispielsweise kann hierzu ein geeigneter Spannungssensor eingesetzt werden.

Zusätzlich oder alternativ ist es auch möglich, den Brückenzweig 20-i für das Antakten jeweils basierend auf einer Lage des Rotors in der elektrischen Maschine 3 zu ermitteln. Hierzu kann die Rotorlage der elektrischen Maschine 3 mittels beliebiger Verfahren zur Rotorlagenbestimmung ermittelt werden.

In dem oben beschriebenen Ausführungsbeispiel wurde jeweils der untere Halbleiterschalter 22-i geschlossen und das Antakten erfolgt durch den entsprechenden oberen Halbleiterschalter 21-i des jeweiligen Brückenzweigs 20-i.

Bei der elektrischen Maschine 3 kann es sich beispielsweise um eine permanenterregte Synchronmaschine oder auch eine Asynchronmaschine handeln. Dabei kann insbesondere bei permanenterregten Synchronmaschinen solange auch der Freilauf als sicherer Zustand gewählt werden, solange die Amplitude der Polradspannung, das heißt die Spannung zwischen Leiter und Stern der elektrischen Maschine kleiner ist als der

Quotient aus $\dfrac{Zwischenkreisspannung}{2 \cdot \cos 30°}$ . Überschreitet die Amplitude der Polradspannung diesen Spannungswert oder einen alternativen vorgegebenen Spannungswert, so kann die Wechselrichteranordnung auch in den aktiven Kurzschluss geschaltet werden. Dabei werden entweder alle oberen Halbleiterschalter 21-i oder alle unteren Halbleiterschalter 22-i geschlossen.

Figur 5 zeigt eine schematische Darstellung eines Ablaufdiagramms, wie es einem Verfahren zum Entladen eines Zwischenkreiskondensators 10 in einer Wechselrichteranordnung zugrunde liegt. Bei der Wechselrichteranordnung handelt es sich um eine zuvor beschriebene Wechselrichteranordnung mit einer Vollbrückenschaltung mit einer Mehrzahl von Brückenzweigen 20-i. In einem ersten Schritt S1 wird dabei zunächst ein primärer Brückenzweig ermittelt. Bei dem primären Brückenzweig handelt es sich dabei um den Brückenzweig mit der kleinsten Phasenspannung zwischen dem Knotenpunkt 23-i und einem Bezugspotential. In Schritt S2 wird daraufhin der erste Halbleiterschalter des primären Brückenzweigs geschlossen und in Schritt S3 der zweite Halbleiterschalter des primären Brückenzweigs angetaktet. Wie zuvor bereits beschrieben, handelt es sich dabei bei dem ersten Halbleiterschalter um den unteren Halbleiterschalter 22-i eines Brückenzweigs 20-i. Das Antakten erfolgt dabei jeweils durch den anderen Halbleiterschalter dieses Brückenzweigs 20-i. In Schritt S4 werden darüber hinaus die Halbleiterschalter 21-i bzw. 22-i der Vollbrücke, welche nicht in dem primären Brückenzweig liegen, geöffnet. Auf diese Weise kann eine an die Wechselrichter angeschlossene elektrische Maschine 3 im Freilauf als sicheren Zustand betrieben werden, während durch das Antakten der Halbleiterschalter ein Zwischenkreiskondensator 10 der Wechselrichteranordnung entladen werden kann.

Zusammenfassend betrifft die vorliegende Erfindung das Entladen eines Zwischenkreiskondensators in einer Wechselrichteranordnung, während eine an die Wechselrichter angeschlossene elektrische Maschine in einem Freilauf als sicheren Zustand betrieben werden kann. Das Entladen des Zwischenkreiskondensators erfolgt durch Antakten eines Halbleiterschalters innerhalb des Wechselrichters, gemäß Anspruch 6. Dabei wird jeweils derjenige Brückenzweig des Wechselrichters für das Antakten ausgewählt, dessen Phasenspannung am kleinsten ist.

**Patentansprüche**

1. Wechselrichteranordnung,

zum Entladen eines Zwischenkreiskondensators (10) der Wechselrichteranordnung in einem sicheren Betriebsmodus,
mit:

einer Vollbrückenschaltung, mit einer Mehrzahl von Brückenzweigen (20-i), wobei jeder Brückenzweig (20-i) einen High-Side-Halbleiterschalter (21-i) und einen Low-Side-Halbleiterschalter (22-i) umfasst, die jeweils an einem Knotenpunkt (23-i) miteinander verbunden sind;

wobei alle Brückenzweige (20-i) an einem Anschluss mit einem Anschluss des Zwischenkreiskondensators (10) elektrisch verbunden sind und alle anderen Anschlüsse der Brückenzweige (20-i) mit einem weiteren Anschluss des Zwischenkreiskondensators (10) elektrisch verbunden sind;

wobei jeder der Knotenpunkte (23-i) mit einem Phasenanschluss einer elektrischen Maschine (3) verbindbar ist,

und der sichere Betriebsmodus ein Freilaufmodus ist, bei dem die High-Side- und Low-Side- Halbleiterschalter (21-i, 22-i) geöffnet sind

und sich ein Spannungssystem (U1, U2, U3) ausbildet;

einer Steuervorrichtung (30), die dazu ausgelegt ist,

den Zwischenkreiskondensator (10) zu entladen, und dazu einen primären Brückenzweig mit der kleinsten Phasenspannung (U1, U2, U3) am jeweiligen Knotenpunkt (23-i) zu ermitteln,

den Low-Side- Halbleiterschalter (22-i) des primären Brückenzweigs zu schließen,

den High-Side- Halbleiterschalter (21-i) des primären Brückenzweigs anzutakten,

wobei das Antakten des High-Side-Halbleiterschalters (21-i) in dem primären Brückenzweig ein kurzzeitiges Ansteuern des High-Side-Halbleiterschalters (21-i) umfasst und der High-Side-Halbleiterschalter (21-i) dabei nicht vollständig leitfähig geschaltet wird,

sodass die Erwärmung des Wechselrichters sowie einer angeschlossenen elektrischen Maschine vermindert wird.

2. Elektrisches Antriebssystem, mit:

einer Wechselrichteranordnung nach Anspruch 1;

wobei der Zwischenkreiskondensator (10) mit einem Eingangsanschluss der Wechselrichteranordnung elektrisch gekoppelt ist; und

einer elektrischen Maschine (3) mit einer Mehrzahl von Phasenanschlüssen, wobei jeder Phasenanschluss der elektrischen Maschine (3) jeweils mit einem Knotenpunkt (23-i) eines Brückenzweigs (20-i) der Vollbrücke elektrisch gekoppelt ist.

3. Elektrisches Antriebssystem nach Anspruch 2, wobei die elektrische Maschine (3) eine permanenterregte Synchronmaschine umfasst.

4. Elektrisches Antriebssystem nach Anspruch 2 oder 3, wobei die Steuervorrichtung (30) dazu ausgelegt ist, in der Vollbrücke einen aktiven Kurzschluss einzustellen, wenn eine Polradspannung in der elektrischen Maschine (3) einen vorbestimmten Grenzwert überschreitet.

5. Elektrisches Antriebssystem nach Anspruch 2, wobei die elektrische Maschine (3) eine Asynchronmaschine umfasst.

6. Verfahren zum Entladen eines Zwischenkreiskondensators (10) in einer

Wechselrichteranordnung in einem sicheren Betriebsmodus mit einer Vollbrückenschaltung, die eine Mehrzahl von Brückenzweigen (20-i) umfasst, und jeder Brückenzweig (20-i) einen High-Side-Halbleiterschalter (21-i) und einen Low-Side-Halbleiterschalter (22-i) umfasst, die jeweils an einem Knotenpunkt (23-i) miteinander verbunden sind,

wobei alle Brückenzweige (20-i) an einem Anschluss mit einem Anschluss des Zwischenkreiskondensators (10) elektrisch verbunden sind und alle anderen Anschlüsse der Brückenzweige (20-i) mit einem weiteren Anschluss des Zwischenkreiskondensators (10) elektrisch verbunden sind;

wobei jeder der Knotenpunkte (23-i) mit einem Phasenanschluss einer elektrischen Maschine (3) verbindbar ist,

und der sichere Betriebsmodus ein Freilaufmodus ist, bei dem die High-Side und die Low-Side-Halbleiterschalter (21-i, 22-i) geöffnet sind und sich ein Spannungssystem (U1, U2, U3) ausbildet;

mit den Schritten:

Ermitteln (S1) eines primären Brückenzweigs mit der kleinsten Phasenspannung (U1, U2, U3) am jeweiligen Knotenpunkt (23-i);

Schließen (S2) des Low-Side-Halbleiterschalters (22-i) des primären Brückenzweigs;

Antakten (S3) des High-Side-Halbleiterschalters (21-i) des primären Brückenzweigs,

wobei das Antakten des High-Side-Halbleiterschalters (21-i) in dem primären Brückenzweig ein kurzzeitiges Ansteuern des High-Side-Halbleiterschalters (21-i) umfasst und der High-Side-Halbleiterschalter (21-i) dabei nicht vollständig leitfähig geschaltet wird,

sodass die Erwärmung des Wechselrichters sowie einer angeschlossenen elektrischen Maschine vermindert wird.

**Claims**

1.  Inverter arrangement,

    for discharging an intermediate-circuit capacitor (10) of the inverter arrangement in a safe operating mode,
    comprising:

    a full bridge circuit having a plurality of bridge arms (20-i), wherein each bridge arm (20-i) comprises a high-side semiconductor switch (21-i) and a low-side semiconductor switch (22-i) which are respectively interconnected at a node (23-i);
    wherein, at a connecting point, all bridge arms (20-i) are electrically connected to a terminal of the intermediate-circuit capacitor (10) and all other terminals of the bridge arms (20-i) are electrically connected to another terminal of the intermediate-circuit capacitor (10);
    wherein each of the nodes (23-i) can be connected to a phase terminal of an electric machine (3),
    and the safe operating mode is a freewheeling mode, in which the high-side and low-side semiconductor switches (21-i, 22-i) are open and a voltage system (U1, U2, U3) is formed;
    a control device (30) which is designed to discharge the intermediate-circuit capacitor (10), and to ascertain a primary bridge arm having the lowest phase voltage (U1, U2, U3) at the respective node (23-i),
    to close the low-side semiconductor switch (22-i) of the primary bridge arm,
    to pulse the high-side semiconductor switch (21-i) of the primary bridge arm, and
    wherein the pulsing of the high-side semiconductor switch (21-i) in the primary bridge arm comprises a brief activation of the high-side semiconductor switch (21-i), and the high-side semiconductor switch (21-i) is then not completely switched to the conductive state,
    such that the heating of the inverter and of a connected electric machine is reduced.

2.  Electric drive system, comprising:

    an inverter arrangement according to Claim 1;
    wherein the intermediate-circuit capacitor (10) is electrically connected to an input terminal of the inverter arrangement; and

    an electric machine (3) having a plurality of phase terminals, wherein each phase terminal of the electric machine (3) is respectively electrically connected to a node (23-i) of a bridge arm (20-i) of the full bridge.

3.  Electric drive system according to Claim 2, wherein the electric machine (3) comprises a permanently excited synchronous machine.

4.  Electric drive system according to Claim 2 or 3, wherein the control device (30) is designed to trigger an active short circuit in the full bridge if a synchronous generated voltage in the electric machine (3) exceeds a predetermined limit value.

5.  Electric machine according to Claim 2, wherein the electric machine (3) comprises an asynchronous machine.

6.  Method for discharging an intermediate-circuit capacitor (10) in an inverter arrangement in a safe operating mode comprising a full bridge circuit, which comprises a plurality of bridge arms (20-i), and each bridge arm (20-i) comprises a high-side semiconductor switch (21-i) and a low-side semiconductor switch (22-i) which are respectively interconnected at a node (23-i),

    wherein, at a connecting point, all bridge arms (20-i) are electrically connected to a terminal of the intermediate-circuit capacitor (10) and all other terminals of the bridge arms (20-i) are electrically connected to another terminal of the intermediate-circuit capacitor (10);
    wherein each of the nodes (23-i) can be connected to a phase terminal of an electric machine (3),
    and the safe operating mode is a freewheeling mode, in which the high-side and low-side semiconductor switches (21-i, 22-i) are open and a voltage system (U1, U2, U3) is formed;
    including the steps of:

    ascertaining (S1) a primary bridge arm having the lowest phase voltage (U1, U2, U3) at the respective node (23-i) ;
    closing (S2) the low-side semiconductor switch (22-i) of the primary bridge arm;
    pulsing (S3) the high-side semiconductor switch (21-i) of the primary bridge arm,
    wherein the pulsing of the high-side semiconductor switch (21-i) in the primary bridge arm comprises a brief activation of the high-side semiconductor switch (21-i), and the high-side semiconductor switch (21-i) is then not completely switched to the conductive state,

such that the heating of the inverter and of a connected electric machine is reduced.

**Revendications**

1. Agencement d'onduleur,

   permettant de décharger un condensateur de circuit intermédiaire (10) de l'agencement d'onduleur dans un mode de fonctionnement sûr ; comprenant :

   un circuit en pont intégral doté d'une pluralité de branches de pont (20-i), chaque branche de pont (20-i) comprenant un commutateur à semi-conducteur côté haut (21-i) et un commutateur à semi-conducteur côté bas (22-i) qui sont reliés respectivement au niveau d'un nœud (23-i) ;
   toutes les branches de pont (20-i) étant reliées électriquement au niveau d'une borne à une borne du condensateur de circuit intermédiaire (10), et toutes les autres bornes des branches de pont (20-i) étant reliées électriquement à une autre borne du condensateur de circuit intermédiaire (10) ;
   chacun des nœuds (23-i) pouvant être relié à une borne de phase d'une machine électrique (3),
   et le mode de fonctionnement sûr étant un mode en roue libre dans lequel les commutateurs à semi-conducteur côté haut et côté bas (21-i, 22-i) sont ouverts et un système de tension (U1, U2, U3) se forme ;
   un dispositif de commande (30) qui est conçu
   pour décharger le condensateur de circuit intermédiaire (10), et pour déterminer à cet effet une branche de pont primaire ayant la plus petite tension de phase (U1, U2, U3) au nœud respectif (23-i),
   pour fermer le commutateur à semi-conducteur côté bas (22-i) de la branche de pont primaire,
   pour déclencher le commutateur à semi-conducteur côté haut (21-i) de la branche de pont primaire,
   le déclenchement du commutateur à semi-conducteur côté haut (21-i) dans la branche de pont primaire comprenant un pilotage de courte durée du commutateur à semi-conducteur côté haut (21-i), et le commutateur à semi-conducteur côté haut (21-i) n'est alors pas entièrement commuté en mode conducteur
   de sorte que l'échauffement de l'onduleur ainsi que d'une machine connectée est diminué.

2. Système d'entraînement électrique, comprenant :

   un agencement d'onduleur selon la revendication 1 ;
   le condensateur de circuit intermédiaire (10) étant couplé électriquement avec une borne d'entrée de l'agencement d'onduleur ; et
   une machine électrique (3) dotée d'une pluralité de bornes de phase, chaque borne de phase de la machine électrique (3) étant respectivement couplée électriquement avec un nœud (23-i) d'une branche de pont (20-i) du pont intégral.

3. Système d'entraînement électrique selon la revendication 2, dans lequel la machine électrique (3) comprend une machine synchrone à excitation permanente.

4. Système d'entraînement électrique selon la revendication 2 ou 3, dans lequel le dispositif de commande (30) est conçu pour régler un court-circuit actif dans le pont intégral si une tension de rotor dans la machine électrique (3) dépasse une valeur limite prédéterminée.

5. Système d'entraînement électrique selon la revendication 2, dans lequel la machine électrique (3) comprend une machine asynchrone.

6. Procédé permettant de décharger un condensateur de circuit intermédiaire (10) dans un agencement d'onduleur dans un mode de fonctionnement sûr avec un circuit en pont intégral qui comprend une pluralité de branches de pont (20-i), et chaque branche de pont (20-i) comprend un commutateur à semi-conducteur côté haut (21-i) et un commutateur à semi-conducteur côté bas (22-i) qui sont respectivement reliés l'un à l'autre au niveau d'un nœud (23-i),

   dans lequel toutes les branches de pont (20-i) sont reliées électriquement au niveau d'une borne à une borne du condensateur de circuit intermédiaire (10), et toutes les autres bornes des branches de pont (20-i) sont reliées électriquement à une autre borne du condensateur de circuit intermédiaire (10) ;
   chacun des nœuds (23-i) pouvant être relié à une borne de phase d'une machine électrique (3),
   et le mode de fonctionnement sûr étant un mode en roue libre dans lequel les commutateurs à semi-conducteur côté haut et côté bas (21-i, 22-i) sont ouverts et un système de tension (U1, U2, U3) se forme ;
   comprenant les étapes consistant à :

déterminer (S1) une branche de pont primaire ayant la plus petite tension de phase (U1, U2, U3) au niveau du nœud respectif (23-i) ;

fermer (S2) le commutateur à semi-conducteur côté bas (22-i) de la branche de pont primaire ;

déclencher (S3) le commutateur à semi-conducteur côté haut (21-i) de la branche de pont primaire,

dans lequel le déclenchement du commutateur à semi-conducteur côté haut (21-i) dans la branche de pont primaire comprend un pilotage de courte durée du commutateur à semi-conducteur côté haut (21-i), et le commutateur à semi-conducteur côté haut (21-i) n'est alors pas entièrement commuté en mode conducteur,

de sorte que l'échauffement de l'onduleur ainsi que d'une machine électrique connectée est diminué.

# Fig. 1

# Fig. 2

# Fig. 3

# Fig. 4

U1    U2    U3

# Fig. 5

S1

S2

S3

S4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013050196 A1
- US 20110221374 A1
- US 20120049773 A1
- US 20140095005 A1
- US 20110080149 A1
- JP 2007195343 A